# FASCICULE DE BREVET EUROPEEN

(11) **EP 2 835 390 B1**
(45) Date de publication et mention de la délivrance du brevet: **09.03.2016**
(21) Numéro de dépôt: 14179886.8
(22) Date de dépôt: 05.08.2014
(51) Int. Cl.: C08G 63/48, C09D 167/08

(54) **RÉSINE ALKYDE BIOSOURCÉE ET PROCÉDÉ DE FABRICATION D'UNE TELLE RÉSINE ALKYDE**
Alkydharz aus erneuerbaren Rohstoffen, und Herstellungsverfahren eines solchen Alkydharzes
Biosourced alkyd resin and method for manufacturing such an alkyd resin

(30) Priorité: 05.08.2013 FR 1357761
(43) Date de publication de la demande: 11.02.2015
(73) Titulaire: A ET A - Mader, 59800 Lille (FR); Roquette Frères, 62136 Lestrem (FR)
(72) Inventeur: Barquant, Cyril, 84200 CARPENTRAS (FR); Roussel, Joël, 84310 MORIERES LES AVIGNON (FR); Buffe, Clothilde, 59160 LOMME (FR); Crowther-Alwyn, Laura, 38100 GRENOBLE (FR)
(74) Mandataire: Balesta, Pierre

(56) Documents cités:
- EP-A2- 0 741 175
- WO-A1-99/38926
- WO-A1-2012/005645
- FR-A1- 2 965 267
- US-A1- 2007 179 277

## Description

La présente invention concerne de manière générale les résines alkydes ainsi que les procédés de fabrication de telles résines. La présente invention se rapporte également à la formulation de telles résines sous forme d'émulsions aqueuses, compositions ou formulations de peinture.

Les résines alkydes sont des résines de type polyesters généralement issues de la polycondensation entre un polyacide et un polyol en présence d'huiles ou d'acides gras à plus ou moins longues chaînes. Ces résines sont principalement utilisées en tant que liant dans le domaine des revêtements, en particulier, le domaine des revêtements pour adhésifs, peintures, lasures, primaires ou vernis.

Les résines alkydes conventionnelles sont formulées à l'aide de solvants organiques volatils d'origine fossile et nocifs pour l'homme et/ou l'environnement (tels que le white spirit, le xylène, le solvant naphta). Les résines alkydes sont, en outre, synthétisées à partir de matières premières d'origine fossile, c'est-à-dire issues de l'industrie pétrochimique ou carbochimique, en particulier à partir d'acides organiques d'origine pétrolière (notamment à base d'anhydride phtalique).

Il existe ainsi un besoin constant de réduire, voire de supprimer les composés nocifs pour l'homme et/ou l'environnement employés dans la synthèse de ces résines alkydes et dans les émulsions aqueuses comprenant de telles résines, notamment lorsqu'elles sont utilisées pour des formulations de peintures destinées au public, tout en satisfaisant le cahier des charges fixé, à la fois en matière de mise en émulsion de la résine alkyde pour fabriquer une peinture du même nom, mais aussi au niveau des propriétés applicatives du film de peinture résultant.

On connaît déjà un certain nombre de solutions relatives à des résines alkydes disposant de composants d'origine naturelle également connus sous le nom de « composants biosourcés ».

Cependant, de telles résines possèdent des performances limitées, notamment en termes de durcissement et de qualité de finition des films correspondants.

A cet égard, le document US 2011/0281972 décrit une composition pour l'obtention d'une résine polyester destinée à être appliquée par poudrage électrostatique et contenant notamment de l'isosorbide en combinaison avec l'acide adipique.

La demande de brevet PCT n° WO 2012/005645 concerne une résine alkyde obtenue en soumettant à une ou plusieurs réactions d'estérification ou de trans-estérifications, une composition comprenant au moins un acide polycarboxylique, au moins un polyalcool et au moins un acide monocarboxylique ou son triglycéride correspondant.

La demande de brevet PCT n° WO 2011/051612 décrit quant à elle une résine alkyde préparée au moins en partie à partir de composants biosourcés et la mise en émulsion aqueuse d'une telle résine avec un agent émulsifiant d'origine naturelle ou fossile.

On connaît également le document WO 2012/042153 qui concerne une résine alkyde à base d'au moins un acide gras et de colophane pouvant contenir les acides succinique, sébacique ou itaconique.

Le document EP 0741175 décrit une émulsion aqueuse d'alkyde préparée à partir de matières premières renouvelables y compris un acide gras ou une huile, de colophane, du glycérol et d'acide succinique.

Travaillant à la recherche d'une résine alkyde performante en termes de dureté et de brillance des peintures dans lesquelles elle est incorporée, et notamment, produite au moins en partie à partir de matière première biosourcée, la Demanderesse est parvenue à mettre au point une telle formulation.

En l'occurrence, cette solution consiste en une résine alkyde issue de la polycondensation :
- d'au moins un polyacide, de préférence biosourcé, ou son anhydride acide de préférence biosourcé ;
- d'au moins un composant à base d'huile, de préférence biosourcée, ou son acide gras correspondant, de préférence biosourcé ;
- d'au moins un polyol, de préférence biosourcé, ayant au moins deux groupes hydroxyles choisi parmi les polyols comprenant au moins un motif de 1,4 :3,6-dianhydrohexitol;
- de la colophane ou de l'un de ses dérivés ;
dans laquelle au moins un polyacide est l'acide succinique, de préférence biosourcé, ou son anhydride, de préférence biosourcé;
et dans laquelle le pourcentage en poids sec dé colophane ou ses dérivés par rapport au poids sec total d'acide succinique ou de son anhydride et de colophane ou ses dérivés est compris entre 10 % et 80 %, de préférence entre 30 % et 70 %, de préférence entre 50 % et 65 % et de préférence encore entre 60 % et 65 %.

Par résine alkyde, on désigne dans le présent texte, un polyester modifié avec des huiles et/ou des acides gras. Par biosourcé, on désigne dans le présent texte, tout composant d'origine végétale ou animale.

De manière complètement inattendue, le choix du couple particulier acide succinique / colophane, dans les pourcentages indiqués ci-dessus, a permis de mettre au point une résine alkyde présentant une viscosité tout à fait compatible avec sa mise en émulsion aqueuse, ce qui rend notamment possible la formulation d'une peinture alkyde dont les propriétés applicatives, la dureté et la brillance du film final sont remarquables.

Le polyacide tel qu'utilisé dans l'invention, comprenant nécessairement l'acide succinique, représente entre 10 % et 30 %, de préférence de 15 % à 25 % en poids par rapport à la quantité totale en poids de résine alkyde; ledit composant polyacide peut, outre l'acide succinique, inclure aussi un autre polyacide ; de préférence, l'acide succinique est le seul constituant polyacide. Dans le contexte de la présente invention, on entend par polyacide tout composant ayant au moins deux groupes carboxyles (-COOH), avantageusement 2 ou 3 groupes carboxyles (-COOH), en particulier 2 groupes carboxyles (-COOH).

Dans le cas où un autre polyacide est présent, la quantité en poids d'acide succinique ou de son anhydride par rapport à la quantité totale en poids de polyacide est comprise entre 10% et 50%, de préférence entre 10% et 40%.

Dans le cas où un autre polyacide est présent, celui-ci peut être choisi parmi les polyacides aromatiques, les polyacides cycloalkyles ou les anhydrides acides desdits polyacides.

Avantageusement, la résine alkyde selon l'invention comprend moins de 10% en moles, encore de préférence moins de 5% en moles de polyacide aromatique, de polyacide cycloalkyle ou d'anhydride acide desdits polyacides autre que la colophane. La résine alkyde selon l'invention est éventuellement exempte de polyacide aromatique, de polyacide cycloalkyle ou d'anhydride acide de ces derniers autre que la colophane.

Dans une variante, le composant polyacide est saturé ou insaturé et comporte une chaîne hydrocarbonée ayant au minimum 2 atomes de carbone et au maximum 36 atomes de carbone. Une chaine hydrocarbonée saturée est constituée par des atomes de carbone et d'hydrogène liés entre eux pour former des groupes dits méthylène -CH₂-. De préférence, le ou les acides gras comportent entre 12 à 24 atomes de carbone.

Avantageusement, un polyacide aromatique selon l'invention est un composé comprenant au moins deux groupes carboxyles et un cycle hydrocarboné aromatique, ledit cycle comprenant de 3 à 13 atomes, de préférence de 3 à 10 atomes et encore de préférence, de 3 à 6 atomes, en particulier de carbone et éventuellement un ou plusieurs hétéroatomes, en particulier choisi parmi O, S et N. Le cycle aromatique peut ainsi être un cycle benzène, furane, pyrrole, thiophène ou encore naphtalène.

Avantageusement, un polyacide cycloalkyle selon l'invention est un composé comprenant au moins deux groupes carboxyles et un cycle hydrocarboné saturé notamment comprenant de 3 à 10 atomes de carbone, de préférence de 3 à 6 atomes de carbone, tels que le cyclopropyle ou le cyclohexyle.

Dans une variante, le composant polyacide ou son anhydride acide, outre l'acide succinique, est choisi seul ou en combinaison parmi l'acide adipique (C₆H₁₀O₄), l'acide itaconique (C₅H₆O₄), l'acide azélaique, l'acide sébacique, l'acide tartrique, l'acide citrique, l'acide malique et/ou leur anhydride acide respectif, des oligomères d'acide gras d'origine végétale et/ou animale, en particulier les dimères ou les trimères d'acide gras d'origine végétal et/ou animale tel que le PRIPOL^{™} 1012 ou 1013 commercialisés par la société CRODA.

Quant au composant à base d'huile ou de son acide gras correspondant, ils sont de préférence biosourcés. La résine selon la présente invention comprend entre 10 % et 50 %, de préférence entre 25 % et 35 % en poids dudit composant. Celui-ci peut être choisi parmi les huiles végétales et/ou animales siccatives et/ou semi siccatives et les acides gras entrant dans la composition desdites huiles végétales et/ou animales.

Parmi les acides gras synthétiques (*i.e*. non biosourcés) pouvant également être utilisées en tant que produit de départ des résines alkydes selon l'invention on peut citer, par exemple, les acides versatique, butanoïque et octanoïque.

Rappelons qu'un acide gras (RCOOH) est un acide carboxylique, saturé ou non, généralement obtenu par hydrolyse des corps gras (notamment les esters d'acides carboxyliques à longue chaine ou les glycérides), dans lequel R est une chaîne alkyle saturée (CₙH₂ₙ₊₁) ou une chaîne alcényle insaturée (CₙH₂ₙ₊₁). De préférence, les acides gras selon l'invention peuvent être introduits en tant que tel ou sous forme de monoglycéride(s) raffiné(s) ou de mélange(s) raffiné(s) de mono et/ou di et/ou tri glycérides, autrement dit sous forme d'huile(s) végétale(s) et/ou animales. L'hydrolyse d'une mole de mono, di ou triglycéride en milieu basique permet la formation respectivement d'une mole, de deux moles ou de trois moles d'acide gras biosourcé selon l'invention.

On comprend par siccativité d'une huile, son aptitude à sécher en présence de l'oxygène de l'air, cette aptitude est croissante avec l'augmentation du nombre d'insaturations (ou de doubles liaisons) présentes dans la structure de l'huile. On parle ainsi d'huile siccative si l'indice d'iode est supérieur à 150, semi-siccative si l'indice d'iode est compris entre 110 et 150 inclus, et non siccative si l'indice d'iode est inférieur à 110. L'indice d'iode « Ii » correspond à la masse d'halogène exprimée en grammes et fixé sur les doubles liaisons présentes dans la structure de l'huile.

Dans une variante, les huiles végétales et leurs acides gras correspondants sont choisis parmi les huiles ou acides gras de Soja, les huiles ou acides gras de Tournesol, les huiles ou acides gras de Lin, les huiles ou acides gras de bois de Chine, les huiles ou acides gras de Ricin, l'acide gras de Tall-Oil et/ou leurs mélanges, de préférence parmi les acides gras précités, de façon avantageuse l'huile de soja ou de lin ou les acides gras de soja ou de lin encore plus avantageusement les acides gras de l'huile de soja ou de lin, et encore plus avantageusement les acides gras de l'huile de soja, en particulier ceux ayant une teneur élevée en acide oléique (avantageusement entre 24 et 34% en poids) tel que l'acide gras de soja commercialisé par la société OLEON sous la référence NOURACID® SZ35.

Avantageusement, les acides gras de l'huile de soja comprennent des acides choisis parmi l'acide oléique (avantageusement entre 20% et 30% en poids), l'acide linoléique (avantageusement entre 40% et 70% en poids), l'acide α-linolénique (avantageusement entre 2% et 13%), l'acide palmitique (avantageusement entre 7% et 18%), l'acide stéarique (de préférence entre 1% et 8%) et les acides gras saturés (avantageusement entre 0,1% et 2% en poids).

Avantageusement, les acides gras de l'huile de lin comprennent des acides choisis parmi l'acide a-linolénique (avantageusement entre 45 et 70% en poids), l'acide linoléique (avantageusement entre 12% et 24 %), l'acide oléique (avantageusement entre 10% et 21% en poids), et les acides gras saturés (avantageusement entre 6% et 18%).

En ce qui concerne le polyol, la résine selon la présente invention comprend entre 20 % et 30 % en poids dudit composant polyol par rapport à la quantité totale en poids de la résine alkyde. Il s'agit ici de la proportion en poids du ou des polyols comprenant chacun au moins deux groupes hydroxyles par rapport au poids total de l'ensemble des composés de départ pour la synthèse de la résine alkyde. Celui-ci est choisi parmi le pentaérythritol (C₅H₁₂O₄), le glycérol (C₃H₈O₃), le sorbitol (C₆H₁₄O₆), l'érythritol (C₄H₁₀O₄), et de préférence le pentaérythritol et le glycérol, et/ou choisi parmi les polyols comprenant au moins un motif de 1,4 :3,6-dianhydrohexitol, et de préférence parmi le 1,4 :3,6-dianhydro-D-sorbitol (isosorbide), le 1,4 :3,6-dianhydro-D-mannitol (isomannide), et le 1,4 :3,6-dianhydro-L-iditol (isoidide), et de préférence encore l'isosorbide, chacun de ces polyols étant pris seul ou en combinaison avec au moins un autre.

De préférence, lorsque le polyol comprend au moins un polyol comprenant au moins un motif de 1,4:3,6-dianhydrohexitol, il comprend aussi au moins un polyol choisi parmi le pentaérythritol (C₅H₁₂O₄), le glycérol (C₃H₈O₃), le sorbitol (C₆H₁₄O₆), l'érythritol (C₄H₁₀O₄), et de préférence le pentaérythritol et le glycérol.

De préférence, le polyol est d'origine biosourcée et peut être choisi parmi le sorbitol et le glycérol.

Dans une variante, la résine selon la présente invention comprend entre 10 % et 25% en poids, de préférence entre 10% et 20% en poids, dudit au moins un polyol comprenant au moins un motif de 1,4 :3,6-dianhydrohexitol par rapport à la quantité totale en poids de la résine alkyde.

En ce qui concerne les dérivés de colophane, également connu sous son nom anglo-saxon « rosin », on entend des dérivés naturels tels que notamment l'acide abiétique ou l'acide déhydroabiétique.

Dans une variante, la résine alkyde présente un indice d'acide inférieur à 20 mg KOH/g, de préférence inférieur ou égal à 15 mg KOH/g. De préférence, l'indice d'acide est supérieur à 5 mg KOH/g. En particulier il est compris entre 6 et 13 mg KOH/g. Par indice d'acide, on entend, au sens de la présente invention, un indice caractérisant l'acidité de la résine alkyde. Cet indice correspond ainsi au nombre de milligrammes d'hydroxyde de potassium nécessaires pour neutraliser un gramme d'échantillon de résine alkyde.

Dans une variante, la résine alkyde présente une longueur en huile comprise entre 10 % et 50 %, de préférence entre 20 % et 40 %, en particulier entre 25 % et 35 %. Par longueur en huile, on entend au sens de la présente invention, la teneur en huile ou en acide gras, c'est à dire la masse en acide gras par rapport à la masse de tous les constituants de la résine alkyde après élimination de l'eau d'estérification.

Les résines alkydes selon l'invention présentent une température de transition vitreuse (dont l'abréviation est « Tv » en Français et « Tg » en Anglais) initiale (c'est-à-dire avant réticulation) généralement comprise entre -30°C et -60°C, ainsi qu'une température de transition vitreuse finale (c'est-à-dire après réticulation) généralement comprise entre 40°C et 60°C.

Une résine particulièrement préférée de l'invention est issue de la réaction entre :
- un acide gras de soja, de préférence un acide gras de soja commercialisé sous le nom Nouracid® SZ35 en quantité allant de 10 % à 50 % en poids, de préférence entre 25 % et 35 %, de préférence encore comprise entre 25 % et 30 %, ou 28 % en poids d'acide gras de soja par rapport à la quantité totale de résine en poids,
- un isosorbide, de préférence un isosorbide commercialisé sous le nom Polysorb® P en quantité allant de 10 % à 20 %, de préférence 13 % à 17 %, de préférence encore 15 % en poids d'isosorbide par rapport à la quantité totale de résine en poids,
- d'un acide succinique, de préférence l'acide succinique commercialisé par la société Reverdia, en quantité allant de 10 % à 30 %, de préférence de 15 % à 25 %, de préférence encore de 15 % à 20 % en poids par rapport à la quantité totale en poids de résine,
- le glycérol ou l'un de ces dérivés, de préférence le glycérol (ou propane-1,2,3-triol), en quantité allant de 5 % à 15 %, de préférence 9 % en poids de glycérol par rapport à la quantité totale de résine en poids,
- et une colophane, de préférence une colophane de gemme portugaise en quantité comprise entre 20 % et 40 %, de préférence 30% par rapport à la quantité totale de résine en poids,
mise en oeuvre à une température d'au moins 230°C, de préférence 240°C, de préférence encore 250°C, pendant au moins 3 heures, de préférence au moins 6 heures, et de préférence encore jusqu'à atteindre un indice d'acide inférieur à 15 mg KOH/gramme de résine.

Une résine particulièrement préférée de l'invention présente les caractéristiques suivantes :
- un indice d'acide au moins supérieur à 5 mg KOH/g, de préférence 9,1 mg KOH/g (ISO 3682) ;
- une viscosité Noury à 20°C, après dilution à 70% de l'extrait sec dans un solvant tel que par exemple le white spirit, comprise entre 20 et 100 Poises (ou secondes également noté « s »), de préférence encore 21.4 poises (ISO 3219 :1993) ;
- une longueur en huile comprise entre 20% et 40%, de préférence 31%.

Une méthode permettant d'identifier si un polyacide, un polyol ou un acide gras est biosourcé, consiste à identifier si ce composant comprend du carbone ¹⁴C, synonyme de présence de carbone renouvelable. En effet, un composant biosourcé est un composant dans lequel le carbone provient de CO₂ fixé récemment (à l'échelle humaine) par photosynthèse à partir de l'atmosphère. Sur terre, ce CO₂ est capté et fixé par les plantes. En mer, ce CO₂ est capté et fixé par des bactéries ou du plancton procédant à une photosynthèse. La teneur en carbone ¹⁴C d'un composant biosourcé est déterminée en application des normes ASTM D 6866 (ASTM D 6866-06) et ASTM D 7026 (ASTM D 7026-04), préférentiellement selon la méthode de mesure de spectrométrie de masse décrite dans la norme ASTM D6866-06 ("accelerator mass spectroscopy").

On désigne, dans le cadre de la présente invention, par composant biosourcé, tout composé comprenant au moins 1 % en poids de carbone renouvelable, avantageusement au moins 50 %, préférentiellement au moins 90 % de carbone renouvelable. Cette définition s'applique également au diluant réactif biosourcé ou aux agents de la mise en émulsion de la résine alkyde cités ci-dessous.

Dans une variante, la résine de l'invention est exclusivement synthétisée à partir de composés (notamment, les polyacides, polyols et huiles) biosourcés.

La présente invention a pour objet, selon un autre aspect, un procédé de préparation d'une résine alkyde, telle que celle décrite selon l'une des variantes de réalisation citées ci-dessus, comprenant une étape de polycondensation des composants suivants :
- au moins un polyacide, de préférence biosourcé, ou son anhydride acide de préférence biosourcé ;
- au moins un composant à base d'huile, de préférence biosourcée, ou son acide gras correspondant, de préférence biosourcé ;
- au moins un polyol, de préférence biosourcé, ayant au moins deux groupes hydroxyles choisi parmi les polyols comprenant au moins un motif de 1,4 :3,6-dianhydrohexitol ;
- de la colophane ou l'un de ses dérivée ;
et dans lequel ces composants étant mélangés dynamiquement en continu à une température comprise entre 180°C et 280°C, de préférence entre 220°C et 280°C, jusqu'à formation de la résine alkyde.

De préférence, ledit au moins un polyacide est l'acide succinique, de préférence biosourcé, ou son anhydride, de préférence biosourcé et le pourcentage en poids sec de colophane ou ses dérivés par rapport au poids sec total d'acide succinique ou de son anhydride et de colophane ou ses dérivés est compris entre 10 % et 80 %, de préférence entre 30 % et 70 %, de préférence encore entre 50 % et 65 %.

Il est avantageux que pendant l'étape de polycondensation (essentiellement par estérification ou trans-estérification) des composants de départ, la fonctionnalité effective du milieu réactionnel soit contrôlée et reste préférentiellement inférieure à 2 afin d'éviter un risque de gélification dudit milieu. Par fonctionnalité effective d'un composant, on comprend, au sens de la présente invention, le nombre de groupes réactifs présents par molécule de ce composé (en particulier le nombre de groupes hydroxyles et/ou carboxyles). Par fonctionnalité effective d'une résine alkyde, on comprend, au sens de la présente invention, la fonctionnalité effective moyenne du mélange réactionnel formé par les composants de départ : F = nombre total de groupes fonctionnels utilisés / nombre total de molécules.

Les proportions des différents composants de départ correspondent à celles indiquées ci-dessus pour la résine alkyde.

Dans une variante, l'étape de polycondensation est effectuée sans catalyseur de la réaction d'estérification. Cette disposition évite l'emploi d'un catalyseur et notamment son recyclage. Néanmoins, il est habituel pour l'homme du métier d'utiliser un catalyseur de polycondensation tel que l'hydroxyde de calcium [Ca(OH)₂] ou l'hydroxyde de lithium [Li(OH)], afin d'accélérer la réaction de polycondensation.

Dans une variante, l'étape de polycondensation est réalisée, par exemple, en mode fusion sans solvant ou, en mode azéotropique avec un solvant, notamment le xylène, pour créer l'azéotropie.

Le mode azéotropique est principalement utilisé pour la synthèse de résines alkydes. Il est basé sur la formation de l'azéotrope eau-solvant, notamment eau-xylène. Dès que les molécules d'eau se forment, elles forment un azéotrope avec le solvant, notamment le xylène, qui se transforme en vapeur et est emporté vers le réfrigérant. Les vapeurs sont ensuite condensées par le réfrigérant. On peut récupérer l'eau en bas du montage, celle-ci étant plus dense que le solvant, notamment le xylène. Le solvant qui a servi pour créer l'azéotropie est éliminé en fin de synthèse par une opération de distillation, notamment l'évaporation du solvant sous pression réduite.

Le mode fusion peut être également très avantageusement utilisé, ce montage étant par ailleurs utilisé pour la synthèse des résines polyesters (in)saturés. Ce mode de synthèse est bien connu de l'homme du métier et est très largement décrit dans la littérature technique pertinente. De préférence, une colonne à garnissage est intégrée entre le ballon et le Dean Stark. Dans la colonne, les glycols s'évaporent en même temps que l'eau mais ils se recondensent plus vite et retombent dans le ballon car leur température d'ébullition est plus haute que celle de l'eau. L'eau, quant à elle, se recondense et retombe dans le Dean Stark. Elle est ainsi évacuée du ballon.

Dans une variante, la température du milieu réactionnel lors de l'étape de polycondensation est élevée progressivement jusqu'à au moins 180°C, de préférence au moins 220°C, sous un flux de gaz inerte chimiquement, en particulier l'azote.

Dans une variante, la température du milieu réactionnel lors de l'étape de polycondensation est maintenue pendant au moins deux heures entre 220°C et 250°C, au moins trois heures, de préférence six heures, à au moins 180°C, de préférence au moins 200°C, de préférence au moins 220°C, et de préférence encore au moins 240°C ou au moins 250°C, jusqu'à atteindre un indice d'acide inférieur à environ 20 mg KOH/g de résine alkyde.

Dans une autre variante, la température du milieu réactionnel est comprise entre 180°C et 280°C, de préférence entre 200°C et 280°C, de préférence entre 220°C et 280°C, de préférence encore entre 240°C et 280°C.

Dans une variante, à l'issue de l'étape de polycondensation, le solvant est éliminé, notamment par distillation sous pression réduite, jusqu'à ce que la résine alkyde formée présente un extrait sec au moins égal à 97 %, de préférence supérieur ou égal à 99 % en masse.

La présente invention a également pour objet, selon un autre aspect, une résine alkyde issue de la polycondensation :
- d'au moins un polyacide, de préférence biosourcé, ou son anhydride acide de préférence biosourcé,
- d'au moins un composant à base d'huile, de préférence biosourcée, ou son acide gras correspondant, de préférence biosourcé,
- d'au moins un polyol, de préférence biosourcé, ayant au moins deux groupes hydroxyles, choisi parmi les polyols comprenant au moins un motif de 1,4 :3,6-dianhydrohexitol ;
- de la colophane ou d'au moins l'un de ses dérivés,
dans laquelle au moins un polyacide est l'acide succinique, de préférence biosourcé, ou son anhydride, de préférence biosourcé;
dans laquelle le pourcentage en poids sec de colophane ou ses dérivés par rapport au poids sec total d'acide succinique ou de son anhydride et de colophane ou ses dérivés est compris entre 10 % et 80 %, de préférence entre 30 % et 70 %, de préférence entre 50 % et 65 % et de préférence encore entre 60 % et 65 % ;
susceptible d'être obtenue par un procédé selon l'invention.

Dans une variante, le pourcentage en poids sec de colophane ou de l'un de ses dérivés par rapport au poids sec total d'acide succinique ou de son anhydride et de colophane ou de l'un de ses dérivés est compris entre 50 % et 65 %, de préférence entre 60 % et 65 %, et la température du milieu réactionnel lors de l'étape de polycondensation est maintenue pendant au moins deux heures, à au moins 220°C, de préférence au moins 240°C, de préférence encore 240°C ou 250°C.

Les résines alkydes selon l'invention peuvent notamment servir à fabriquer une composition comprenant une résine alkyde selon l'une des variantes de réalisation décrites ci-dessus, et un diluant réactif, de préférence biosourcé.

Les résines alkydes selon l'invention peuvent notamment servir à fabriquer une émulsion aqueuse d'une résine alkyde comprenant de 25 % à 60 %, avantageusement 30 % à 50 %, en poids de résine alkyde par rapport à la quantité totale en poids de l'émulsion obtenue selon l'une des variantes de réalisation décrites ci-dessus, ou de la résine décrite ci-dessus, et au moins un agent émulsifiant, de préférence d'origine végétale ou animale, de préférence en quantité allant de 0,1 % à 7%, avantageusement de 0,3 à 1% en poids de l'émulsion aqueuse. Les valeurs (%) en poids indiquées ci-après sont données par rapport au poids total de l'émulsion aqueuse.

Dans une variante, l'agent émulsifiant peut être ionique ou non ionique, et est de préférence choisi seul ou en combinaison parmi : les sulfonates d'alkyle, les sulfonates d'aryle, les stéarates, la lécithine, les monoesters de glycérol, les monoesters d'acide gras éthoxylés ou non, les tensio-actifs possédant une double liaison, les tensio-actifs polymériques, les esters de pentaérythritol, les esters de sorbitane, tels que le mono oléate de sorbitane ou le monolaurate de sorbitane, avantageusement il s'agit d'un ester de sorbitane, en particulier le monolaurate de sorbitane.

Dans une variante, l'émulsion aqueuse comprend au moins un agent anti-mousse, de préférence en quantité allant de 0,1 % à 2 % en poids de ladite émulsion aqueuse, en particulier de 0,2 % à 1,5% en poids. Dans une sous-variante, l'agent anti-mousse est choisi seul ou en combinaison parmi : les polysiloxanes, les esters d'acide gras et de polyoxyéthylène, des esters d'acide gras et de polyoxypropylène, les esters de sorbitan et de polyoxyéthylène tels que le monolaurate de sorbitan polyoxyéthyléné, avantageusement il s'agit d'un ester de sorbitan et de polyoxyéthylène.

Dans une variante, l'émulsion aqueuse comprend au moins un agent de stabilisation, de préférence en proportion allant de 0,1 % à 8 % en poids de ladite émulsion, avantageusement de 0.2 % à 5 % en poids. Dans une sous-variante, l'agent de stabilisation est choisi seul ou en combinaison parmi : les amidons modifiés, les gommes xanthane, les gommes guar, les celluloses modifiées, de façon avantageuse il s'agit des amidons modifiés tel que le TACKIDEX® 110UY.

Dans une variante, l'émulsion aqueuse comprend au moins un agent polyfonctionnel ayant une fonction d'agent anti-mousse et/ou d'agent émulsifiant et/ou d'agent de stabilisation, de préférence en quantité allant de 0,5 % à 8 % en poids de ladite émulsion. Dans une sous-variante, l'agent polyfonctionnel est choisi seul ou en combinaison parmi : les β-cyclodextrines, la gomme arabique, des protéines végétales et animales, notamment la caséine et/ou la gélatine.

Les résines alkydes peuvent être mises en émulsion avec l'eau pour former une émulsion huile dans eau. Pour former cette émulsion, on peut mélanger la résine alkyde avec de l'eau et les différents agents précités pour former une émulsion. Il existe plusieurs appareils capables de réaliser une émulsion ; depuis l'agitateur jusqu'à l'homogénéisateur haute pression en passant par le moulin colloïdal et le turbo émulsionneur, tous bien connus de l'homme du métier.

Ces émulsions peuvent être fabriquées par tout procédé bien connu de l'homme du métier. Notamment, grâce à un procédé comprenant une étape de mélange d'une phase huile comprenant la résine alkyde selon l'invention et d'une phase aqueuse.

On peut réaliser un procédé dans lequel on passe par une émulsion eau dans huile tel que décrit dans la demande WO 2011 / 051612. Ces résines alkydes, rendues suffisamment fluides par chauffage conventionnel à 80°C, sont ensuite dispersées dans l'eau afin de former une émulsion de type eau dans huile (E/H). Cette émulsion E/H va s'inverser par rajout d'eau pour former une émulsion de type huile dans eau (H/E).

Alternativement, on peut réaliser un procédé de fabrication de l'émulsion par une étape de mise en émulsion directe de la phase huile dans la phase eau. Ce procédé est rendu possible par l'excellent comportement rhéologique de la résine alkyde selon l'invention.

Plus particulièrement, on peut fabriquer directement une émulsion huile dans eau (H/E) par la mise en oeuvre des étapes suivantes :
- une première étape au cours de laquelle, ladite résine alkyde est chauffée à une température supérieure ou égale à 40°C, de préférence inférieure ou égale à 90°C pour former un mélange A, sous agitation, notamment à l'aide d'un dispositif de mélange ayant une pâle d'agitation tournant à une vitesse de rotation comprise entre 2 000 tours/min et 8 000 tours/min, éventuellement avec un agent émulsifiant ;
- une deuxième étape au cours de laquelle, un agent stabilisant est mélangé avec de l'eau, et éventuellement avec un agent anti-mousse, en chauffant à une température supérieure ou égale à 40°C, de préférence inférieure ou égale à 90°C pour former un mélange B ;
- une troisième étape au-cours de laquelle on incorpore dans ledit mélange B, sous forte agitation, notamment à l'aide d'un dispositif comportant une pâle d'agitation tournant entre 5 000 tr/min et 8 000 tr/min, ledit mélange A, de préférence la température des mélanges A et B est inférieure ou égale à 60°C, pendant au moins une minute pour l'obtention de l'émulsion de ladite résine alkyde.

Les émulsions ainsi formées présentent préférentiellement une viscosité allant de 1000 cP (ou 1000 mPa.s) à 2000 centipoises (ou 2 000 mPa.s) à 20°C, mesurée selon la norme ISO 3219 : 1993.

La présente invention a pour objet, selon un autre aspect, une peinture comprenant au moins une résine alkyde selon l'invention, de préférence sous forme d'une émulsion aqueuse telle que définie ci-dessus.

La formulation de peinture peut comprendre également, de manière bien connue de l'homme du métier, des agents supplémentaires, notamment un ou plusieurs pigments, tels que des pigments naturels (biosourcés) : le dioxyde de titane, les oxydes de fer, le noir de carbone, le jaune de gaude, le bleu de pastel et le rouge de garance ; ou encore des pigments de synthèse issus de source fossile : le bleu et le vert de phtalocyanine, le jaune azoïque et le rouge de quinachridone.

La formulation de peinture peut comprendre également des charges, tels que les carbonates de calcium, le talc ou la silice, la cire d'abeille ou la cire de carnauba.

D'autres applications dans lesquelles les résines alkydes de l'invention, peuvent être utilisées sont également envisagées. On peut citer notamment, à titre d'exemple, les domaines d'applications des adhésifs, des revêtements (tels que les peintures décoratifs et industriels, les laques, les vernis et les lasures) ou bien encore des plastifiants.

La formulation de peinture de l'invention peut également contenir un agent siccatif ou semi-siccatif.

Il est possible d'obtenir la formulation de peinture de l'invention par mélange de l'émulsion aqueuse avec les agents supplémentaires précédemment cités et éventuellement de l'eau. Les quantités des charges et/ou pigments sont déterminées en fonction des propriétés désirées (telles que, par exemple, la mouillabilité ou la tension de surface) pour la dite formulation.

La présente invention sera mieux comprise à lecture des exemples de réalisation suivants, cités à titre non limitatif.

### EXEMPLES REALISES

Dans cet exemple, 7 résines alkydes ont été réalisées:
- 2 mettant en oeuvre un couple acide adipique / colophane (exemples 1 et 5);
- 1 mettant en oeuvre de l'acide adipique sans colophane (exemple 3) ;
- 4 selon l'invention, mettant en oeuvre un couple acide succinique / colophane, avec 46 % en poids de colophane par rapport à l'acide (exemple 2) et avec 63 % en poids de colophane par rapport à l'acide.

Ces résines ont ensuite été diluées, puis mises en émulsion aqueuse, et elles ont enfin servi à formuler des peintures dont on a déterminé le brillant et la dureté.

### Résines Alkydes synthétisées

### Exemple Comparatif 1 :

Cet exemple met en oeuvre 41 % en poids de colophane par rapport au poids total de colophane et d'acide adipique.

Dans un réacteur de 2 litres équipé d'un agitateur mécanique, d'une sonde de température, d'une arrivée d'azote, d'une prise d'échantillon, d'une colonne à garnissage surmontée d'un décanteur et d'un réfrigérant, ont été introduit à température ambiante :
- 192.1 g d'acide gras de soja (Nouracid® SZ35 commercialisé par Brenntag) ;
- 103.4 g de colophane de gemme portugaise (commercialisée par Resineland) ;
- 100 g d'isosorbide (Polysorb® P commercialisé par Roquette) ;
- 150 g d'acide adipique
- 63 g de glycérine.

La température du milieu réactionnel a ensuite été élevée progressivement jusqu'à 220°C sous flux d'azote. L'eau de condensation a été éliminée au fur et à mesure jusqu'à atteindre un indice d'acide inférieur à 15 mg KOH/gramme de résine. En fin de réaction, une résine alkyde se présentant sous la forme d'un liquide visqueux a été obtenue. Les caractéristiques de la résine alkyde obtenue sont :
- un indice d'acide de 7.3 mg KOH/g (ISO 3682) ;
- un extrait sec de 69.89 % (ISO 3251) ;
- une viscosité Noury de 16.2 s à 20°C (viscosité observée selon la procédure décrite dans la norme ISO 3219 :1993 ; cette viscosité est celle de la résine alkyde obtenue selon le procédé décrit ci-dessus après dilution de la résine à 70% dans le white spirit);
- une longueur en huile de 35% ;

### Exemple Comparatif 2 :

Cet exemple ne met pas en oeuvre de colophane.
Dans un réacteur de 2 litres équipé d'un agitateur mécanique, d'une sonde de température, d'une arrivée d'azote, d'une prise d'échantillon, d'une colonne à garnissage surmontée d'un décanteur et d'un réfrigérant, ont été introduit à température ambiante :
- 358.6 g d'acide gras de soja (Nouracid® SZ35) ;
- 93.3g d'isosorbide (Polysorb® P) ;
- 140 g d'acide adipique ;
- 86.9 g de pentaéryhtritol ;
- 27.2g de xylène.

La température du milieu réactionnel a ensuite été élevée progressivement jusqu'à 220°C sous flux d'azote. L'eau de condensation a été éliminée au fur et à mesure jusqu'à atteindre un indice d'acide inférieur à 15 mg KOH/gramme de résine. En fin de réaction, une résine alkyde se présentant sous la forme d'un liquide visqueux a été obtenue. Les caractéristiques de la résine alkyde obtenue sont :
- un indice d'acide de 10.5 mg KOH/g (ISO 3682) ;
- un extrait sec de 99 % (ISO 3251) ;
- une viscosité 340 poises à 20°C (ISO 3219 :1993) ;
- une longueur en huile de 58%.

### Exemple Comparatif 3 :

Cet exemple met en oeuvre 58 % en poids de colophane par rapport au poids total de colophane et d'acide adipique.
Dans un réacteur de 2 litres équipé d'un agitateur mécanique, d'une sonde de température, d'une arrivée d'azote, d'une prise d'échantillon, d'une colonne à garnissage surmontée d'un décanteur et d'un réfrigérant, ont été introduit à température ambiante :
- 172.9 g d'acide gras de soja (Nouracid® SZ35) ;
- 186.2 g de colophane de gemme portugaise ;
- 90 g d'isosorbide (Polysorb® P) ;
- 135 g d'acide adipique ;
- 56.7 g de glycérine.

La température du milieu réactionnel a ensuite été élevée progressivement jusqu'à 220°C sous flux d'azote. L'eau de condensation a été éliminée au fur et à mesure jusqu'à atteindre un indice d'acide inférieur à 20 mg KOH/gramme de résine. En fin de réaction, une résine alkyde se présentant sous la forme d'un liquide visqueux a été obtenue. Les caractéristiques de la résine alkyde obtenue sont :
- un indice d'acide de 16 mg KOH/g (ISO 3682) ;
- un extrait sec de 69.89 % (ISO 3251) ;
- une viscosité Noury de 8.8 s à 20°C (viscosité observée selon la procédure décrite dans la norme ISO 3219 :1993 ; cette viscosité est celle de la résine alkyde obtenue selon le procédé décrit ci-dessus après dilution de la résine à 70% dans le white spirit) ;
- une longueur en huile de 30%.

### Exemple 1 selon l'invention :

Cet exemple met en oeuvre 46 % en poids de colophane par rapport au poids total de colophane et d'acide succinique.
Dans un réacteur de 2 litres équipé d'un agitateur mécanique, d'une sonde de température, d'une arrivée d'azote, d'une prise d'échantillon, d'une colonne à garnissage surmontée d'un décanteur et d'un réfrigérant, ont été introduit à température ambiante :
- 191.7 g d'acide gras de soja (Nouracid® SZ35) ;
- 103.2 g de colophane de gemme portugaise ;
- 99.8 g d'isosorbide (Polysorb® P) ;
- 121 g d'acide succinique ;
- 62.3 g de glycérine.

La température du milieu réactionnel a ensuite été élevée progressivement jusqu'à 250°C sous flux d'azote. L'eau de condensation a été éliminée au fur et à mesure jusqu'à atteindre un indice d'acide inférieur à 15 mg KOH/gramme de résine. En fin de réaction, une résine alkyde se présentant sous la forme d'un liquide visqueux a été obtenue. Les caractéristiques de la résine alkyde obtenue sont :
- un indice d'acide de 8.2 mg KOH/g (ISO 3682) ;
- un extrait sec de 70.34 % (ISO 3251) ;
- une viscosité Noury de 56 s à 20°C (viscosité observée selon la procédure décrite dans la norme ISO 3219 :1993 ; cette viscosité est celle de la résine alkyde obtenue selon le procédé décrit ci-dessus après dilution de la résine à 70% dans le white spirit);
- une longueur en huile de 37%.

### Exemple 2 selon l'invention :

Cet exemple met en oeuvre 63 % en poids de colophane par rapport au poids total de colophane et d'acide succinique.
Dans un réacteur de 2 litres équipé d'un agitateur mécanique, d'une sonde de température, d'une arrivée d'azote, d'une prise d'échantillon, d'une colonne à garnissage surmontée d'un décanteur et d'un réfrigérant, ont été introduit à température ambiante :
- 158.4 g d'acide gras de soja (Nouracid® SZ35) ;
- 170.6 g de colophane de gemme portugaise ;
- 82.5 g d'isosorbide (Polysorb® P) ;
- 100 g d'acide succinique ;
- 52 g de glycérol.

La température du milieu réactionnel a ensuite été élevée progressivement jusqu'à 250°C sous flux d'azote. L'eau de condensation a été éliminée au fur et à mesure jusqu'à atteindre un indice d'acide inférieur à 15 mg KOH/gramme de résine. En fin de réaction, une résine alkyde se présentant sous la forme d'un liquide visqueux a été obtenue. Les caractéristiques de la résine alkyde obtenue sont :
- un indice d'acide de 9.1 mg KOH/g (ISO 3682) ;
- un extrait sec de 69.75 % (ISO 3251) ;
- une viscosité Noury de 21.4 s à 20°C (viscosité observée selon la procédure décrite dans la norme ISO 3219 :1993 ; cette viscosité est celle de la résine alkyde obtenue selon le procédé décrit ci-dessus après dilution de la résine à 70% dans le white spirit) ;
- une longueur en huile de 31%.

### Exemple 3 selon l'invention:

Cet exemple met en oeuvre 63 % en poids de colophane par rapport au poids total de colophane et d'acide succinique.
Dans un réacteur de 2 litres équipé d'un agitateur mécanique, d'une sonde de température, d'une arrivée d'azote, d'une prise d'échantillon, d'une colonne à garnissage surmontée d'un décanteur et d'un réfrigérant, ont été introduit à température ambiante :
- 140.6 g d'acide gras de soja (Nouracid® SZ35) ;
- 302.9 g de colophane de gemme portugaise ;
- 146.4 g d'isosorbide (Polysorb® P) ;
- 177.5 g d'acide succinique ;
- 52 g de glycérol.

La température du milieu réactionnel a ensuite été élevée progressivement jusqu'à 250°C sous flux d'azote. L'eau de condensation a été éliminée au fur et à mesure jusqu'à atteindre un indice d'acide inférieur à 15 mg KOH/gramme de résine. En fin de réaction, une résine alkyde se présentant sous la forme d'un liquide visqueux a été obtenue. Les caractéristiques de la résine alkyde obtenue sont :
- un indice d'acide de 13.2 mg KOH/g (ISO 3682) ;
- un extrait sec de 69.55 % (ISO 3251) ;
- une viscosité Noury 480 s à 20°C (viscosité observée selon la procédure décrite dans la norme ISO 3219 :1993; cette viscosité est celle de la résine alkyde obtenue selon le procédé décrit ci-dessus après dilution de la résine à 70% dans le white spirit).

### Exemple 4 selon l'invention:

Cet exemple met en oeuvre 63 % en poids de colophane par rapport au poids total de colophane et d'acide succinique.
Dans un réacteur de 2 litres équipé d'un agitateur mécanique, d'une sonde de température, d'une arrivée d'azote, d'une prise d'échantillon, d'une colonne à garnissage surmontée d'un décanteur et d'un réfrigérant, ont été introduit à température ambiante :
- 211 g d'acide gras de soja (Nouracid® SZ35) ;
- 302.9 g de colophane de gemme portugaise ;
- 146.4 g d'isosorbide (Polysorb® P) ;
- 177.5 g d'acide succinique ;
- 92.3 g dé glycérol.

La température du milieu réactionnel a ensuite été élevée progressivement jusqu'à 250°C sous flux d'azote. L'eau de condensation a été éliminée au fur et à mesure jusqu'à atteindre un indice d'acide inférieur à 15 mg KOH/gramme de résine. En fin de réaction, une résine alkyde se présentant sous la forme d'un liquide visqueux a été obtenue. Les caractéristiques de la résine alkyde non diluée obtenue sont :
- un indice d'acide de 10 mg KOH/g (ISO 3682) ;
- un extrait sec de 70.09 % (ISO 3251) ;
- une viscosité Noury 64.5 s à 20°C (viscosité observée selon la procédure décrite dans la norme ISO 3219 :1993 ; cette viscosité est celle de la résine alkyde obtenue selon le procédé décrit ci-dessus après dilution de la résine à 70% dans le white spirit).

### Exemple 5 comparatif: Cet exemple est identique à l'exemple 2 selon l'invention, la seule différence étant le remplacement de l'isosorbide par une quantité molaire équivalente en monopropylène glycol.

### Peintures Alkydes réalisées

Dans un premier temps, les résines alkydes ont été diluées dans le white spirit afin d'atteindre une valeur d'extrait sec de 70 % ±2 %. Elles ont ensuite été évaluées et comparées à une résine Glycéro du marché d'origine pétrosourcée : Synolac 6885 commercialisée par Arkema et présentant un extrait sec de 70 % ±2 %. Chaque résine a ensuite été formulée avec les mêmes additifs et dans les mêmes proportions qu'indiqué dans le tableau 1.

**Tableau 1**

| Matières Premières (% en poids du poids total de la peinture) | Peinture témoin (Synolac 6865/Leader Laque Blanc) | Peinture Alkyde selon l'invention |
|---|---|---|
| White Spirit | 27.4 % | 27.4 % |
| Agent mouillant | 0.45 % | 0.45 % |
| Agent épaississant Disperbyk 116 | 0.5 % | 0.5 % |
| Titane RDI-S (Kemira) | 30 % | 30% |
| Carbonate de Calcium Mikhart 40 (La Provençale) | 7.3 % | 7.3 % |
| Agent anti-peau Troymax (Troy) | 0.3 % | 0.3 % |
| Agent Siccatif | 1.55 % | 1.55 % |

Les résultats des tests figurent dans le tableau 2.

La lecture du tableau 2 démontre que les peintures selon l'invention, permettent d'obtenir un compromis au moins équivalent à celui obtenu pour la résine commerciale, au niveau de sa dureté et de sa brillance.

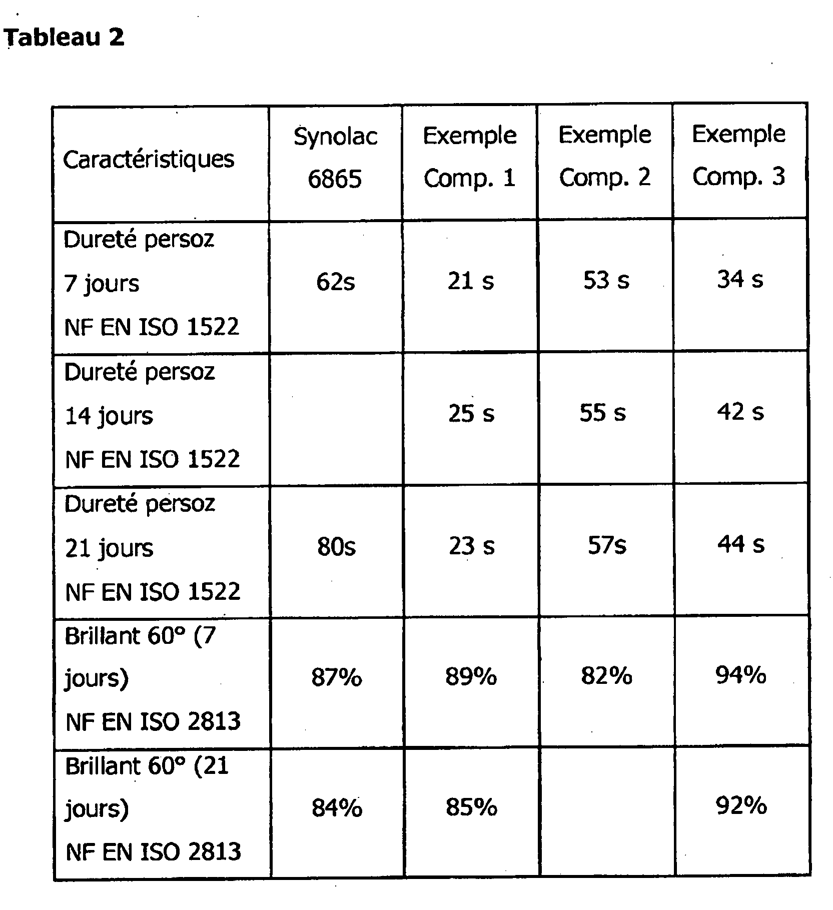

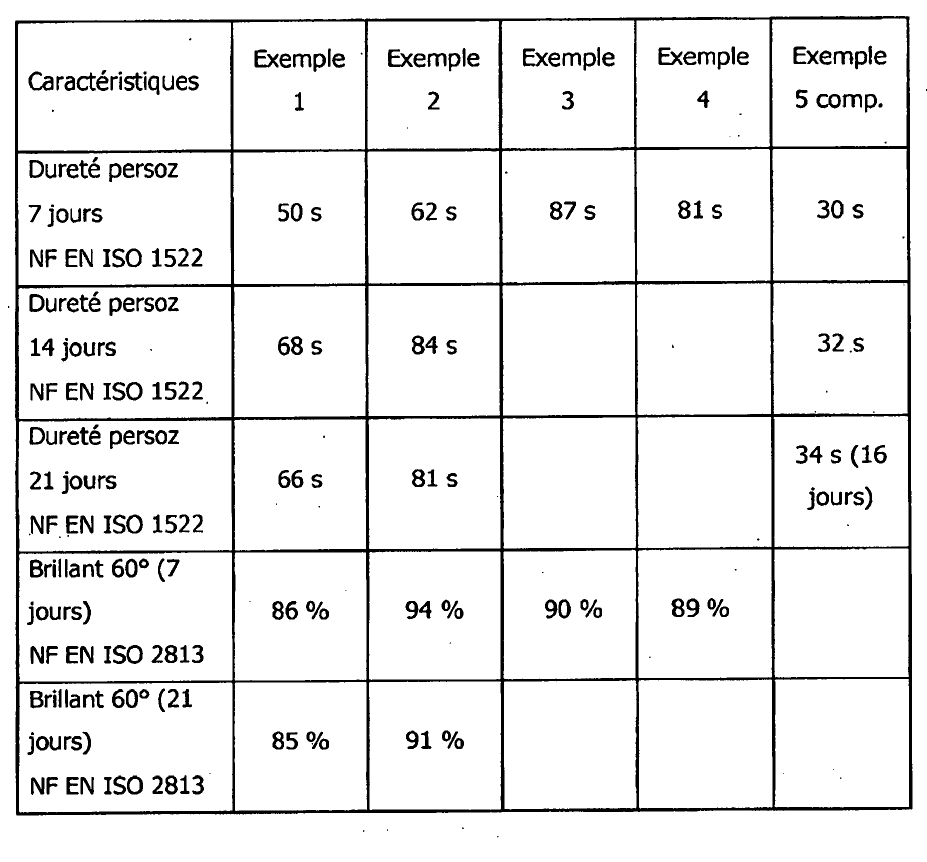

## Revendications

1. Résine alkyde issue de la polycondensation :
- d'au moins un polyacide, de préférence biosourcé, ou son anhydride acide de préférence biosourcé,
- d'au moins un composant à base d'huile, de préférence biosourcée, ou son acide gras correspondant, de préférence biosourcé,
- d'au moins un polyol, de préférence biosourcé, ayant au moins deux groupes hydroxyles, choisi parmi les polyols comprenant au moins un motif de 1,4 :3,6-dianhydrohexitol,
- de la colophane ou d'au moins l'un de ses dérivés,
dans laquelle au moins un polyacide est l'acide succinique, de préférence biosourcé, ou son anhydride, de préférence biosourcé;
et dans laquelle le pourcentage en poids sec de colophane ou ses dérivés par rapport au poids sec total d'acide succinique ou de son anhydride et de colophane ou ses dérivés est compris entre 10 % et 80 %, de préférence entre 30 % et 70 %, de préférence encore entre 50 % et 65 %.

2. Résine selon la revendication 1, **caractérisée en ce qu'**elle comprend de 10 % à 30 %, de préférence de 15 % à 25 % en poids du composant polyacide.

3. Résine selon l'une ou l'autre des revendications 1 et 2, **caractérisée en ce qu'**elle comprend entre 10 % et 50 %, de préférence entre 25 % et 35 % en poids du composant à base d'huile ou son acide gras correspondant.

4. Résine selon l'une quelconque des revendications 1 à 3, **caractérisée en ce que** les huiles végétales et leurs acides gras correspondants sont choisis parmi les huiles ou acides gras de Soja, les huiles ou acides gras de Tournesol, les huiles ou acides gras de Lin, les huiles ou acides gras de bois de Chine, les huiles ou acides gras de Ricin, l'acide gras de Tall-Oil ou leurs mélanges, de préférence parmi les acides précités.

5. Résine selon l'une quelconque des revendications 1 à 4, **caractérisée en ce qu'**elle comprend en outre un autre composant polyol choisi parmi le pentaérythritol (C₅H₁₂O₄), le glycérol (C₃H₈O₃), le sorbitol (C₆H₁₄O₆), l'erythritol (C₄H₁₀O₄), de préférence le pentaérythritol et le glycérol.

6. Résine selon l'une quelconque des revendications 1 à 5, **caractérisée en ce que** le polyol comprenant au moins un motif de 1,4:3,6-dianhydrohexitol est choisi parmi : le 1,4 :3,6-dianhydro-D-sorbitol (isosorbide), le 1,4 :3,6-dianhydro-D-mannitol (isomannide), le 1,4 :3,6-dianhydro-L-iditol (isoidide), de préférence encore l'isosorbide, ou un mélange de ceux-ci.

7. Résine selon l'une quelconque des revendications 1 à 6, **caractérisée en ce qu'**elle comprend de 20 % à 30 % en poids de composant(s) polyol(s).

8. Résine selon l'une quelconque des revendications 1 à 7, **caractérisée en ce qu'**elle présente un indice d'acide inférieur à 20 mg KOH/g, de préférence inférieur ou égal à 15 mg KOH/g et de préférence encore supérieur à 5 mg KOH/g.

9. Résine selon une quelconque des revendications précédentes, **caractérisée en ce qu'**elle présente une longueur en huile comprise entre 10 % et 50 % en poids, de préférence entre 20 % et 40 % en poids, en particulier entre 25 % et 35 % en poids.

10. Procédé de préparation d'une résine alkyde selon l'une quelconque des revendications 1 à 9, comprenant une étape de polycondensation des composants suivants :
- au moins un polyacide, de préférence biosourcé, ou son anhydride acide de préférence biosourcé ;
- au moins un composant à base d'huile, de préférence biosourcée, ou son acide gras correspondant, de préférence biosourcé ;
- au moins un polyol, de préférence biosourcé, ayant au moins deux groupes hydroxyles choisi parmi les polyols comprenant au moins un motif de 1,4 :3,6-dianhydrohexitol ;
- de la colophane ou l'un de ses dérivés ;
- ledit au moins un polyacide étant l'acide succinique, de préférence biosourcé, ou son anhydride, de préférence biosourcé et le pourcentage en poids sec de colophane ou ses dérivés par rapport au poids sec total d'acide succinique ou de son anhydride et de colophane ou ses dérivés est compris entre 10 % et 80 %, de préférence entre 30 % et 70 %, de préférence encore entre 50 % et 65 % ;
ces composants étant mélangés dynamiquement en continu à une température comprise entre 180°C et 280°C, de préférence entre 220°C et 280°C, jusqu'à formation de la résine alkyde.

11. Procédé de préparation selon la revendication 10, caractérisé en ce l'étape de polycondensation est effectuée sans catalyseur de la réaction d'estérification.

12. Procédé de préparation selon l'une ou l'autre des revendications 10 et 11, dans lequel la température du milieu réactionnel lors de l'étape de polycondensation est élevée jusqu'à au moins 180°C, de préférence au moins 220°C, sous un flux de gaz inerte chimiquement, notamment sous un flux d'azote.

13. Procédé de préparation selon l'une quelconque des revendications 10 à 12, dans lequel la température du milieu réactionnel lors de l'étape de polycondensation est maintenue pendant au moins deux heures entre 220°C et 250°C jusqu'à atteindre un indice d'acide inférieur à 20 mg KOH/g de la résine alkyde.

14. Peinture comprenant une résine selon l'une quelconque des revendications 1 à 9.

15. Utilisation d'une résine selon l'une quelconque des revendications 1 à 9 en tant que liant dans une composition de revêtements choisi parmi les revêtements pour adhésifs, peintures, lasures, primaires ou vernis.

## Patentansprüche

1. Alkydharz, das aus der Polykondensation hervorgegangen ist:
- von wenigstens einer Polysäure, vorzugsweise biobasierten, oder ihrem vorzugsweise biobasierten Säureanhydrid,
- von wenigstens einer Komponente auf der Basis von Öl, vorzugsweise biobasiertem, oder seiner entsprechenden, vorzugsweise biobasierten Fettsäure,
- von wenigstens einem Polyol, vorzugsweise biobasierten, mit wenigstens zwei Hydroxylgruppen, das aus den Polyolen mit wenigstens einem 1,4 :3,6-Dianhydrohexitol-Motiv ausgewählt ist,
- von Kolophonium oder von wenigstens einem seiner Derivate,
bei dem wenigstens eine Polysäure Bernsteinsäure, vorzugsweise biobasierte, oder deren Anhydrid, vorzugsweise biobasiertes, ist,
und bei dem der Trockengewichtsprozentsatz von Kolophonium oder seinen Derivaten bezogen auf das Gesamttrockengewicht von Bernsteinsäure oder ihrem Anhydrid und von Kolophonium oder seinen Derivaten zwischen 10 % und 80 %, vorzugsweise zwischen 30 % und 70 %, weiterhin vorzugsweise zwischen 50 % und 65 % liegt.

2. Harz nach Anspruch 1, **dadurch gekennzeichnet, dass** es 10 Gew.-% bis 30 Gew.-%, vorzugsweise 15 Gew.-% bis 25 Gew.-% der Polysäure-Komponente umfasst.

3. Harz nach dem einen oder dem anderen der Ansprüche 1 und 2, **dadurch gekennzeichnet, dass** es zwischen 10 Gew.-% und 50 Gew.-%, vorzugsweise zwischen 25 Gew.-% und 35 Gew.-% der Komponente auf der Basis von Öl oder seiner entsprechenden Fettsäure umfasst.

4. Harz nach einem der Ansprüche 1 bis 3, **dadurch gekennzeichnet, dass** die Pflanzenöle und ihre entsprechenden Fettsäuren aus den Sojaölen oder -fettsäuren, den Sonnenblumenölen oder -fettsäuren, den Leinölen oder -fettsäuren, den Tungölen oder -fettsäuren, den Rizinusölen oder -fettsäuren, der Tallöl-Fettsäure oder deren Mischungen, vorzugsweise aus den vorgenannten Säuren, ausgewählt sind.

5. Harz nach einem der Ansprüche 1 bis 4, **dadurch gekennzeichnet, dass** es ferner eine weitere Polyol-Komponente umfasst, die aus Pentaerythritol (C₅H₁₂O₄), Glycerin (C₃H₈O₃), Sorbitol (C₆H₁₄O₆), Erythritol (C₄H₁₀O₄), vorzugsweise Pentaerythritol und Glycerin ausgewählt ist.

6. Harz nach einem der Ansprüche 1 bis 5, **dadurch gekennzeichnet, dass** das Polyol, das wenigstens ein 1,4 :3,6-Dianhydrohexitol-Motiv umfasst, aus 1,4 :3,6-Dianhydro-D-sorbitol (Isosorbid), 1,4 :3,6-Dianhydro-D-mannitol (Isomannid), 1,4 :3,6-Dianhydro-L-iditol (Isoidid), weiterhin vorzugsweise Isosorbid, oder einer Mischung aus diesen, ausgewählt ist.

7. Harz nach einem der Ansprüche 1 bis 6, **dadurch gekennzeichnet, dass** es 20 Gew.-% bis 30 Gew.-% Polyol-Komponente(n) umfasst.

8. Harz nach einem der Ansprüche 1 bis 7, **dadurch gekennzeichnet, dass** es einen Säureindex kleiner als 20 mg KOH/g, vorzugsweise kleiner als oder gleich 15 mg KOH/g und weiterhin vorzugsweise größer als 5 mg KOH/g aufweist.

9. Harz nach einem der vorhergehenden Ansprüche, **dadurch gekennzeichnet, dass** es eine Öllänge zwischen 10 Gew.-% und 50 Gew.-%, vorzugsweise zwischen 20 Gew.-% und 40 Gew.-%, insbesondere zwischen 25 Gew.-% und 35 Gew.-% aufweist.

10. Verfahren zur Herstellung eines Alkydharzes nach einem der Ansprüche 1 bis 9, umfassend einen Schritt zur Polykondensation der folgenden Komponenten:
- wenigstens eine Polysäure, vorzugsweise biobasierte, oder ihr vorzugsweise biobasiertes Säureanhydrid,
- wenigstens eine Komponente auf der Basis von Öl, vorzugsweise biobasiertem, oder seine entsprechende, vorzugsweise biobasierte Fettsäure,
- wenigstens ein Polyol, vorzugsweise biobasiertes, mit wenigstens zwei Hydroxylgruppen, das aus den Polyolen mit wenigstens einem 1,4 :3,6-Dianhydrohexitol-Motiv ausgewählt ist,
- Kolophonium oder eines seiner Derivate,
- wobei die wenigstens eine Polysäure Bernsteinsäure, vorzugsweise biobasierte, oder ihr Anhydrid, vorzugsweise biobasiertes, ist und der Trockengewichtsprozentsatz von Kolophonium oder seinen Derivaten bezogen auf das Gesamttrockengewicht von Bernsteinsäure oder ihrem Anhydrid und von Kolophonium oder seinen Derivaten zwischen 10 % und 80 %, vorzugsweise zwischen 30 % und 70 %, weiterhin vorzugsweise zwischen 50 % und 65 % liegt,
wobei diese Komponenten bei einer Temperatur zwischen 180 °C und 280 °C, vorzugsweise zwischen 220 °C und 280 °C, bis zur Bildung des Alkydharzes fortlaufend dynamisch gemischt werden.

11. Herstellungsverfahren nach Anspruch 10, **dadurch gekennzeichnet, dass** der Polykondensationsschritt ohne Katalysator der Veresterungsreaktion durchgeführt wird.

12. Herstellungsverfahren nach dem einen oder dem anderen der Ansprüche 10 und 11, wobei die Temperatur des Reaktionsmediums während des Polykondensationsschrittes bis auf wenigstens 180 °C, vorzugsweise wenigstens 220 °C, unter einem chemisch inerten Gasstrom, insbesondere unter einem Stickstoffstrom, erhöht wird.

13. Herstellungsverfahren nach einem der Ansprüche 10 bis 12, wobei die Temperatur des Reaktionsmediums während des Polykondensationsschrittes über wenigstens zwei Stunden zwischen 220 °C und 250 °C gehalten wird, bis ein Säureindex kleiner als 20 mg KOH/g des Alkydharzes erreicht ist.

14. Farbe, die ein Harz nach einem der Ansprüche 1 bis 9 umfasst.

15. Verwendung eines Harzes nach einem der Ansprüche 1 bis 9, als Bindemittel in einer Zusammensetzung von Beschichtungen, ausgewählt aus den Beschichtungen für Klebemittel, Farben, Lasuren, Grundierungen oder Lacke.

## Claims

1. An alkyd resin derived from the polycondensation of:
- at least one, preferably biosourced polyacid, or the preferably biosourced acid anhydride thereof;
- at least one, preferably biosourced oil-based component, or its preferably biosourced corresponding fatty acid;
- at least one, preferably biosourced polyol, having at least two hydroxyl groups, selected from among polyols comprising at least one 1,4:3,6-dianhydrohexitol repeat unit;
- rosin or at least one of the derivatives thereof;
wherein at least one polyacid is succinic acid, preferably biosourced, or the preferably biosourced anhydride thereof;
and wherein the percentage in dry weight of rosin or the derivatives thereof relative to the total dry weight of succinic acid or its anhydride and of rosin or its derivatives is between 10 % and 80 %, preferably between 30 % and 70 %, further preferably between 50 % and 65 %.

2. The resin according to claim 1, **characterized in that** it comprises 10 % to 30 %, preferably 15 % to 25 % by weight of the polyacid component.

3. The resin according to either of claims 1 and 2, **characterized in that** it comprises between 10 % and 50 %, preferably between 25 % and 35 % by weight of oil-based component or the corresponding fatty acid thereof.

4. The resin according to any of claims 1 to 3, **characterized in that** the vegetable oils and the corresponding fatty acids thereof are selected from among soybean oils or fatty acids, sunflower seed oils or fatty acids, flax oils or fatty acids, tung oils or fatty acids, castor oils or fatty acids, the fatty acid of Tall-Oil, or the mixtures thereof, preferably from among the aforementioned acids.

5. The resin according to any of claims 1 to 4, **characterized in that** it further comprises another polyol component selected from among pentaerythritol (C₅H₁₂O₄), glycerol (C₃H₈O₃), sorbitol (C₆H₁₄O₆), erythritol (C₄H₁₀O₄), preferably pentaerythritol and glycerol.

6. The resin according to any of claims 1 to 5, **characterized in that** the polyol comprising at least one repeat unit of 1,4:3,6-dianhydrohexitol is selected from among: 1,4:3,6-dianhydro-D-sorbitol (isosorbide), 1,4:3,6-dianhydro-D-mannitol (isomannide), 1,4:3,6-dianhydro-L-iditol (isoidide), preferably isosorbide, or a mixture thereof.

7. The resin according to any of claims 1 to 6, **characterized in that** it comprises 20 % to 30 % by weight of polyol component(s).

8. The resin according to any of claims 1 to 7, **characterized in that** it has an acid number lower than 20 mg KOH/g, preferably it is 15 mg KOH/g or lower and further preferably higher than 5 mg KOH/g.

9. The resin according to any of the preceding claims **characterized in that** it has an oil length of between 10 % and 50 % by weight, preferably between 20 % and 40 % by weight, in particular between 25 % and 35 % by weight.

10. A method for preparing an alkyd resin according to any of claims 1 to 9 comprising a polycondensation step of the following components:
- at least one preferably biosourced polyacid, or the preferably biosourced acid anhydride thereof;
- at least one preferably biosourced oil-based component, or the corresponding, preferably biosourced fatty acid thereof;
- at least one preferably biosourced polyol having at least two hydroxyl groups selected from among polyols comprising at least one repeat unit of 1,4:3,6-dianhydrohexitol;
- rosin or one of the derivatives thereof;
- the said at least one polyacid being succinic acid, preferably biosourced, or the preferably biosourced anhydride thereof, and the dry weight percentage of rosin or its derivatives relative to the total dry weight of succinic acid or its anhydride and of rosin or its derivatives is between 10 % and 80 %, preferably between 30 % and 70 %, further preferably between 50 % and 65 %:
these components being subjected to continuous, dynamic mixing at a temperature of between 180°C and 280°C, preferably between 220°C and 280°C until formation of the alkyd resin.

11. The preparation method according to claim 10, **characterized in that** the polycondensation step is conducted without catalyst for the esterification reaction.

12. The preparation method according to either of claims 10 or 11 wherein the temperature of the reaction medium at the polycondensation step is high and of up to at least 180°C, preferably at least 220°C under a stream of chemically inert gas, in particular under a stream of nitrogen.

13. The preparation method according to any of claims 10 to 12 wherein the temperature of the reaction medium at the polycondensation step is held for at least two hours at between 220°C and 250°C until the alkyd resin reaches an acid number lower than 20 mg KOH/g.

14. A paint comprising a resin according to any of claims 1 to 9.

15. The use of a resin according to any of claims 1 to 9 as binder in a coating composition selected from among coatings for adhesives, paints, wood stains, primers or varnishes.
